# EUROPEAN PATENT APPLICATION

(11) **EP 1 492 276 A2**
(43) Date of publication of application: **29.12.2004**
(21) Application number: 04014202.8
(22) Date of filing: 17.06.2004
(51) Int. Cl.: H04L 12/28

(54) **Method for accessing and access point in a wireless lan and station**

(30) Priority: 24.06.2003 JP 2003179860; 06.11.2003 JP 2003377059
(71) Applicant: ALPS ELECTRIC CO., LTD., Tokyo 145-8501 (JP)
(72) Inventor: Kawamura, Yuzuru, Ota-ku Tokyo 145-8501 (JP); Oura, Satoshi, Ota-ku Tokyo 145-8501 (JP); Komatsuzaki, Motoharu, Ota-ku Tokyo 145-8501 (JP)
(74) Representative: Klunker . Schmitt-Nilson . Hirsch

(57) **Abstract**

A method for accessing an access point (AP) in a wireless LAN and a station are provided that allow users to determine the current country mode and more conveniently and faster perform access to the AP when access to the AP occurs through worldwide roaming. The method extracts country information from a beacon which is received from the access point when access to the access point occurs and displays the country name of the extracted country and a map including the country on a display device. The method manages multiple profiles by grouping into multiple profile groups for each country and tries to access sequentially and automatically all access points which are set in the multiple profiles included in the profile groups of the country. Therefore, if a response from the AP is received, users can receive various services by communication through the AP.

## Description

This application claims the benefit of Japanese Patent Application Nos. 2003-377059, filed on June 24, 2003 and 2003-377059, filed on November 6, 2003, which are incorporated herein by reference.

### BACKGROUND OF THE INVENTION

### 1. Field of the Invention

The present invention relates to a method for accessing an access point (AP) in a wireless local area network (LAN) and a station, especially a method for accessing the AP in the wireless LAN that can access APs worldwide in a wireless LAN from a station which is set in a PC, and a station that can perform worldwide roaming.

### 2. Description of the Related Art

Recently, APs for wireless LAN have been provided in many stores and public areas and many users can use various telecommunication services through these APs. In addition, since international exchanges are growing fast, it is required that stations should support a worldwide roaming function for accessing a wireless LAN.

In general, devices that can access an AP in a wireless LAN, for example, information processing portable devices such as PCs and PDAs, need to be equipped with a station access application for accessing the AP in the wireless LAN. Conventionally, when a user wants to access worldwide APs in a wireless LAN using such a device, the device needs to install a station application program for Japanese based utility or English based utility according to the type of the operating system (OS) loaded in the PCs. During accessing APs in practice, according to the information in a beacon that is received from the AP in the wireless LAN, the device changes operating parameters such as carrier frequency and channel.

A conventional method for accessing AP in wireless LAN is disclosed in Japanese Unexamined Patent Application Publication No. 2000-184439.

In the conventional method, when a portable device worldwide accesses an AP in a wireless LAN, the device first needs to install station application program for Japanese based utility or English based utility according to the type of the OS loaded in the PCs. Then the device changes operating parameters such as carrier frequency and channel according to the information in a beacon that is received from the AP. Therefore, this method has a disadvantage in that a longer time is required for connecting to the AP.

Further, in the above conventional method, when a user wants to access an AP, the user turns on PC, and then the PC receives a beacon message from a neighboring AP. When the user starts to access AP by changing the utility according to the country information in a beacon, only the channel information is provided. Therefore, the user does not know the country mode in which the PC is set. As a result, the conventional method has possible unknown legal problems due to the user's ignorance and access inconvenience due to the difference in the country modes. These problems occur severely where the AP is located in a country border region where plural countries bordered each other.

### SUMMARY OF THE INVENTION

Embodiments of the present invention provide a simpler and faster method for accessing the AP in the wireless LAN and displaying the country information concerning the region where the user accesses the AP and a station having the worldwide roaming function.

In one aspect for accessing the access point in the wireless LAN, country information is extracted from a beacon which is received from the access point when access to the access point occurs, and the country name of the extracted country is displayed on a display device. In this aspect, a shape of the country may be displayed on a map as well as the country name of the extracted country.

Further, access point information of the connecting place may be set up into multiple profile groups for each country, country information extracted from a beacon which is received from the access point when access to the access point occurs, sequential access to the access points which are set to the multiple profiles included in the profile groups of the extracted country may be attempted.

Another aspect provides a station which has a worldwide roaming function, for accessing access point in wireless LAN. The station contains means for extracting country information included in a beacon which is received from the access point when the station accesses the AP and display means for displaying the country name of the extracted country on a display device. In this aspect, the display device may display a country shape on a map as well as the country name of the extracted country.

Another aspect provides a station comprising means for managing multiple profiles in which access point information of the connecting place is set up by grouping into multiple profile groups for each country, means for extracting country information from a beacon which is received from the access point when the station access the access point, means for trying sequentially to access access points which are set to the multiple profiles included in profile group of the extracted country, respectively.

### BRIEF DESCRIPTION OF THE DRAWINGS

Fig. 1 shows an example of the access environment between the AP and the PC device according to an embodiment of the present invention;
Fig. 2 shows the profile group that is used in an embodiment of the present invention;
Fig. 3 shows the flowchart that describes a method for accessing the AP in the wireless LAN according to an embodiment of the present invention;
Fig. 4 shows the flowchart that describes in detail the procedure of the Step 307 portion in Fig. 3; and
Fig. 5 illustrates an example of the display configuration on the PC screen.

### DESCRIPTION OF THE PREFERRED EMBODIMENT

Embodiments of the present invention regarding a method for accessing an AP in a wireless LAN and a station with a worldwide roaming function will be described with reference to the drawings.

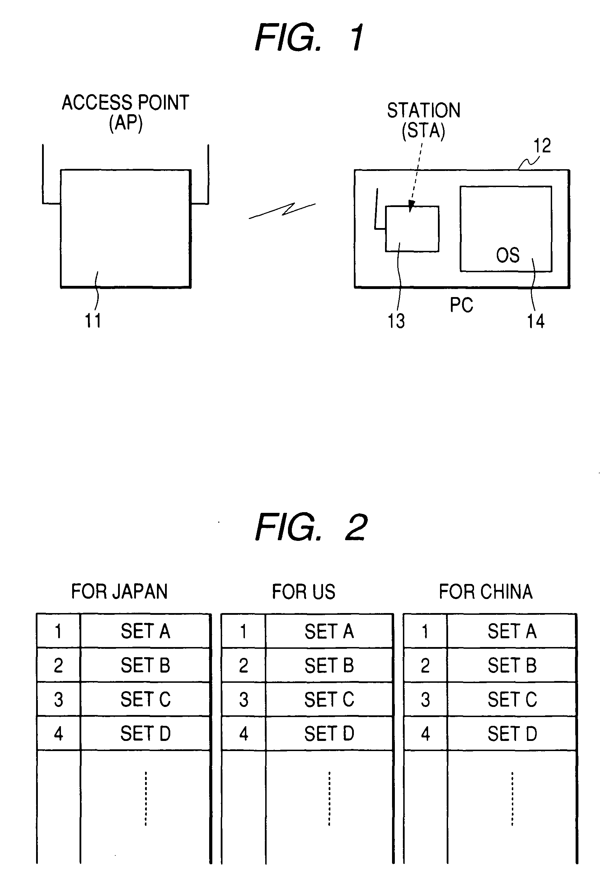

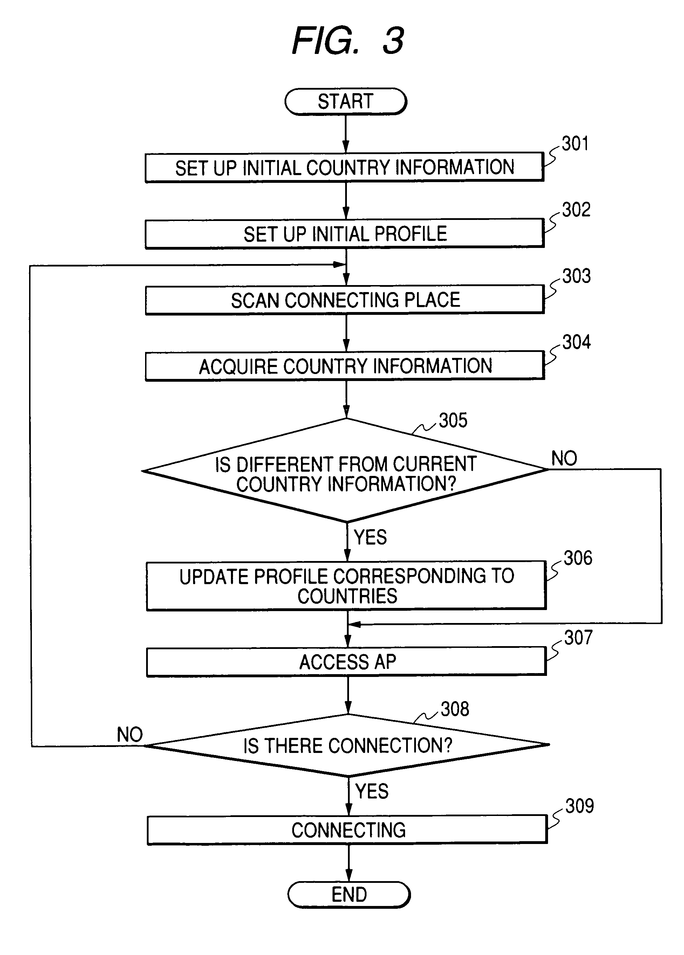

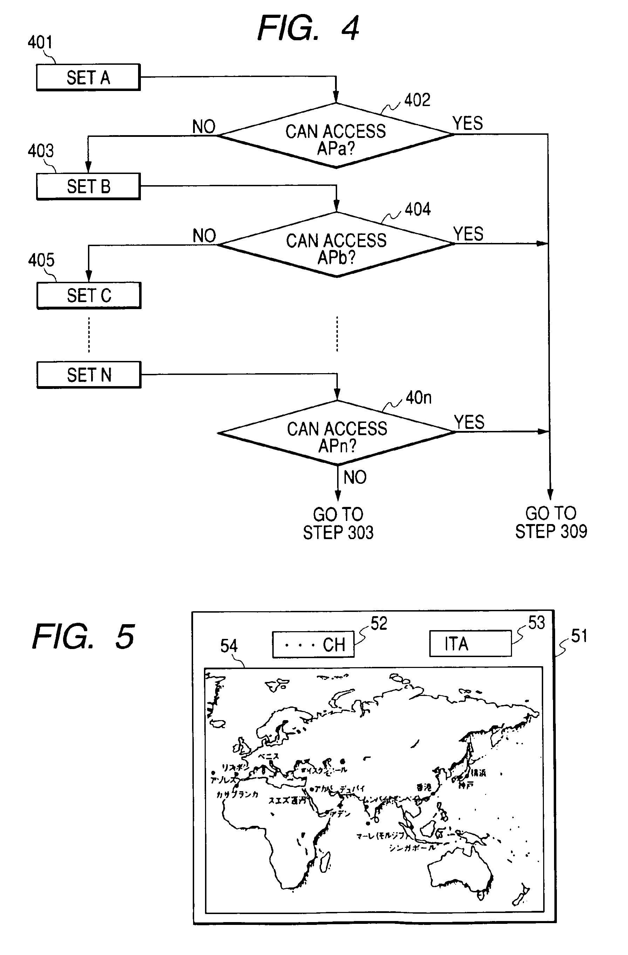

Fig. 1 shows an example of the access environment between the AP and the PC device according to an embodiment of the present invention, wherein 11, 12, 13, and 14 represent the access point (AP), a PC, a station (STA), and an OS, respectively. Fig. 2 shows the profile group that is used in an embodiment of the present invention. Fig. 3 shows the flowchart that describes the method for accessing the AP in the wireless LAN according to an embodiment of the present invention. Fig. 4 shows the flowchart that describes in detail the procedure of the Steps 307 and 308 in Fig. 3. Finally, Fig. 5 illustrates an example of the display configuration on the PC screen.

The access environment for accessing the AP according to embodiments of the present invention is shown in Fig. 1. When a user wants to receive communication service by accessing an AP 11 from a PC 12 comprising a STA 13 with a worldwide roaming function, the user accesses the AP 11 by bringing the PC 12 within the access region that is covered by the AP in the wireless LAN.

The PC 12 comprises a STA 13 with a worldwide roaming function and an OS 14. The STA 13 in which application programs are installed has functions that can discriminate the OS type and AP type of the wireless LAN. In addition, in order to roam worldwide, the STA 13 first scans all channels (in 2.4 GHz and 5.0 GHz bands) for all country specifications to receive a beacon from the AP 11. It receives frames including the country information from the beacon and then changes the profile information based on the country information in frames. The STA 13 manages the profile group for each country.

The profile group that is used in an embodiment of the present invention, as shown in Fig. 2, is managed by profile group tables according to the country by grouping multiple profiles for each country as one group. Even though Fig. 2 shows three tables for Japan, China, and US, the STA 13 can manage more tables for each country. Each profile group table contains multiple profiles (Set A, Set B, Set C, Set D, etc) that are set to the AP information like the AP address. The mode, network name, channel number, and AP address for each profile are collected and stored in the profile information in advance.

When the access to the AP 11 is performed once, the STA 13 established in the PC 12 receives a beacon from the AP 11 that can receive in the location of the PC 12, extracts the country information from information included in the beacon, and then selects the profile group table shown in Fig. 2 based on the extracted country information. Using the profile information which is stored and managed in the country table, the STA 13 can sequentially access the AP 11.

Referring to flowchart shown in Fig. 3, the process for accessing the AP in the wireless LAN according to an embodiment of the present invention is explained.
(1) One piece of country information is initially set up in the STA 13, and a corresponding profile is initially set up (Step 301 and 302).
(2) The STA 13 scans one or more accessible connecting place APs and searches a valid network list, using the initially set profile information, and then acquires the country information included in the beacon that is received from the AP. The acquired country information is transmitted from the STA 13 to the PC 12 and displayed on the PC screen. The display is controlled by the PC 12, as shown in Fig. 5, the current AP's channel number and the country name are displayed on the channel display area 52 and the country information area 53 of the display screen 51, respectively. Further, on the map information display area 54 of the display screen 51, a map representing the shape of the country or a map representing plural countries including the specific country, or a map of the world is graphically displayed. Furthermore, when the map of the plural countries is displayed, the specific country is displayed with a different color from that of the other countries. This enables users to know the current AP's country information (Step 303 and 304).
(3) The STA 13 compares the country information set in Step 301 with the country information acquired in Step 304, and determines whether or not they are same. If they are not coincident with each other, and the country information acquired in Step 304 which is displayed as mentioned above, is coincident with the desired country information, the profile is updated to the country profile that is acquired from the information in the beacon. The profile update is performed by setting up one profile of the country group that corresponds to the country profile group table for each country, as shown in Fig. 2 (Step 305 and 306).
(4) When the access to the AP according to the profile in Step 306 fails, the STA 13 tries to sequentially access the multiple profiles in the corresponding profile group table (Step 307). The process is described in detail referring to the flowchart shown in Fig. 4 (Step 307).
(5) By accessing the AP in Step 307, determination of whether the AP for the location of the connection (also referred to as the connecting place) is found or not. If the STA 13 finds a valid AP, the STA connects to the AP. However, if the STA 13 fails to find a valid AP, it tries to find another valid AP (an AP having same or different country information) by repeating the procedure from Step 303 (Step 308 and 309).

In the aforementioned process, if the country information acquired in Step 304 is coincident with a desired country, the user can quickly find a desired country's AP by skipping processes in Steps 305 to 307 and repeating the procedure from Step 303. In addition, the country name and map are displayed as the initial country information when the STA 13 initially sets up one piece of country information in Step 301. In this regard, when the country name and map are displayed by the country information included in the beacon information from the AP, it is possible to display two country names and to display the countries on the map so as to be able to distinguish the countries from each other.

Next, the detailed procedure for Steps 307 and 308 for accessing the AP will be described with reference to Fig. 4.
(1) If the process starts, the STA tries to access the APa that is set as the first profile (Set A) in the table of the country corresponding to a country profile group table for each country which is initially set in the utility (Step 401).
(2) As a result of the access to APa in Step 401, the STA in the user PC determines whether the access to APa is possible or not using a response from APa. If access is not possible, the STA tries to access APb that is set as the next profile (Set B) in the table of the corresponding country (Step 402 and 403)
(3) In the same way, as a result of access to APb in Step 403, the STA determines whether the access to APb is possible or not using a response from APb. If the access is not possible, the STA tries to access APc that is set as the next profile (Set C) in the table of the corresponding country. If access fails, the STA tries to access the AP after the next one so that the STA sequentially tries to access APs which are set to all profiles stored in the table of the corresponding country until the final profile (Set N) is reached. However, if access still fails, the STA moves to the procedure in Step 301 because a valid AP cannot be found (Step 404, 405 to 40n).
(4) In Step 402, 404, and 40n, the STA moves to the procedure in Step 309 if it can access an AP that is set up in each profile.

The process according to an embodiment of the present invention can be executed using an application program that can be stored in various media such as HD, DAT, FD, DVD-ROM, CD-ROM.

As a result of the method for accessing the AP in the wireless LAN according to the embodiment of the present invention, the method can display country information such as the country name and geographical location of the country on the display device by receiving the beacon from the AP 11 that can receive in the present location and extracting the country information from the information in the beacon. Thus, users can easily know the current AP's country information. In addition, since the method selects the country profile group table for each country based on the extracted country information to try to sequentially access the AP 11 based on the profile information which is stored and managed in the table, users can more conveniently and more quickly perform sequential access to the AP 11.

According to the present invention, users can easily determine the AP information concerning the country where the user accesses APs as well as can more conveniently and more quickly perform access to an AP when access to an AP through worldwide roaming is needed.

## Claims

1. A method for accessing an access point in a wireless LAN, comprising:
extracting country information from a beacon which is received from an access point when access to the access point occurs; and
displaying a country name of an extracted country on a display device.

2. The method for accessing the access point in the wireless LAN according to Claim 1, wherein a shape of the country is displayed on a map as well as the country name of the extracted country.

3. The method for accessing the access point in the wireless LAN according to Claim 1 or 2, comprising:
grouping multiple profiles in which access point information of a connecting place is set up into multiple profile groups for each country;
extracting the country information from the beacon which is received from the access point when access to the access point occurs;
trying to access sequential access points which are set in the multiple profiles included in the profile groups of the extracted country.

4. A station, which has a worldwide roaming function, for accessing an access point in a wireless LAN, comprising:
means for extracting country information included in a beacon which is received from the access point when the station accesses the access point; and
display means for displaying a country name of an extracted country on a display device.

5. The station according to Claim 4, wherein the display device displays a country shape on a map as well as the country name of the extracted country.

6. The station according to Claim 4 or 5, comprising:
means for managing multiple profiles in which access point information of a connecting place is set up by grouping into multiple profile groups for each country;
means for extracting country information from a beacon which is received from the access point when the station access the access point;
means for trying sequentially to access the access points which are set to the multiple profiles included in profile group of the extracted country.
